# EUROPÄISCHE PATENTSCHRIFT

(11) **EP 1 343 078 B1**
(45) Veröffentlichungstag und Bekanntmachung des Hinweises auf die Patenterteilung: **11.08.2004**
(21) Anmeldenummer: 02000141.8
(22) Anmeldetag: 07.01.2002
(51) Int. Cl.: G06F 9/44

(54) **System zur Modellierung und Generierung von Softwaregenerierungssystemen**
Modelling system and generation of software generating systems
Dispositif pour la modélisation et génération des systèmes de génération de logiciel

(43) Veröffentlichungstag der Anmeldung: 10.09.2003
(73) Patentinhaber: Interactive Objects Software GmbH, 79100 Freiburg (DE)
(72) Erfinder: Uhl, Axel, Dipl.-Inform., 79117 Freiburg (DE)

(56) Entgegenhaltungen:
- WO-A-00/14629
- DOUGLASS B P: "DESIGNING REAL-TIME SYSTEMS WITH THE UNIFIED MODELING LANGUAGE" ELECTRONIC DESIGN, PENTON PUBLISHING, CLEVELAND, OH, US, Bd. 45, Nr. 20, 15. September 1997 (1997-09-15), Seite 132,134,136,13 XP000752106 ISSN: 0013-4872

## Beschreibung

Die Erfindung bezieht sich auf ein System, mit dem lauffähige translative Generatoren für Softwaresysteme erstellt werden können.

Bei der Entwicklung großer, komplexer Softwaresysteme wird in zunehmendem Maße *modellbasiert* vorgegangen. Das heißt, in einer Entwurfsphase wird ein oder mehrere *Modell(e)* der zu erstellenden Software entwickelt, das / die dann schrittweise verfeinert und schließlich in das endgültige Softwaresystem transformiert wird / werden. Ein Modell dient dann dauerhaft als ein Teil der Dokumentation des Systems, nämlich als eine *Sicht,* die --- wie für ein Modell charakteristisch --- potentiell gewisse Abstraktionen vornimmt und somit z.B. irrelevante Details wegläßt. Außerdem kann es für spätere Modifikationen am System herangezogen werden, wobei die Verfeinerungs- und Transformationsprozesse dann teilweise (für die modifizierten Teile des Modells) oder vollständig wiederholt werden.

Die Transformation der Modelle in Softwareartefakte wie etwa Sourcecode, Konfigurationsdateien oder Elemente eines anderen Modells kann dabei zu einem großen Teil mittels *Generatoren* automatisiert werden. Dabei implementiert ein Generator letztendlich eine *Abbildung* eines Modells auf eine Menge von Artefakten (Sourcecode, Konfigurationsdateien, Elemente anderer Modelle, sonstige Artefakte), deren Urbildmenge die Menge aller möglichen Modelle und die Bildmenge die Menge aller möglichen generierbaren Artefakte ist. Die Literatur unterscheidet hier zwischen strktureller, verhaltensbasierter und translative Codegenerierung (siehe *Rodney Bell, Code Generation from Object Models, Embedded Systems Programming, Vol. 11 No 3,* *März 1998*, http://www.embedded.com/98/9803fe3.htm). Bei den hier zu erstellenden Generatoren soll es sich um translative handeln, die eine echte Obermenge der beiden anderen Ansätze (strukturell, verhaltensbasiert) darstellen.

Softwaregeneratoren sind nicht neu. Übersetzer (Compiler) sind ebenfalls Generatoren, wobei die Urbildmenge durch die Grammatik der Programmiersprache und die Bildmenge durch die Hardwarearchitektur (Prozessor, Maschinensprache, Eingabe /Ausgabeschnittstellen usw.), für die der Übersetzer Code erzeugt, definiert ist. Hier sollen jedoch im wesentlichen solche Generatoren betrachtet werden, die aus Modellen auf einer höheren Abstraktionsebene als Quellcode, also z.B. einem UML-Modell, Softwareartefakte (s.o.) generieren.

Bei den bestehenden Generatoren sind typischerweise die Abbildungsvorschriften in Form von Skripten oder Programmcode definiert, die / der dann während des Generierungsprozesses abgearbeitet werden / wird. Die Urbildmenge wird dabei durch ein Metamodell beschrieben (Beispiel: UML Metamodell). Der Generator greift dann über eine Schnittstelle auf Instanzen dieses Metamodells (also auf eine Modell) zu, um somit die Eingabe für die von ihm implementierte Abbildung zu erhalten.

Die Generierung von Artefakten bietet sich besonders im Umfeld komplexer Komponententechnologien (J2EE, .NET, CORBA Components) an. Das ist bedingt durch den hohen Anteil an schematisch zu erstellendem Quelltext für Aspekte wie Transaktionssteuerung, Verteilungsverwaltung, Lastabgleich, Persistenz etc. Sie kommt aber dennoch auch in Bereichen sinnvoll zum Einsatz, wo große Mengen von einfach gearteten Komponenten modellgetrieben erstellt und verwaltet werden sollen, da ein modellgetriebener Ansatz wesentliche weitere Vorteile bietet (siehe auch *OMG Document ormsc*/*01-07-01: Model Driven Architecture*).

Beispiel für existierende Generatoren oder Produkte, die solche Generatoren als eine Komponente enthalten, sind
- ArcStyler C-GEN
- Together/J
- Rational Rose
- CodaGen
- Gen-it

Dabei unterscheiden sich die aufgeführten Produkte hinsichtlich der Erstellung einer Generierungsvorschrift und ihrer Erweiterbarkeit erheblich. Die Erweiterbarkeit bzw. Anpaßbarkeit der Abbildungsvorschriften ist Voraussetzung für die Entkopplung der Entwicklung der Architektur eines Softwareprojektes von der Entwicklung der fachlichen Inhalte der einzelnen Komponenten. Soll zum Beispiel im laufenden Entwicklungsprojekt eine Änderung an der Struktur der Komponentenarchitektur auf alle bereits bestehenden Komponenten angewendet werden, so kann bei einem erweiterbaren Generator die Abbildungsvorschrift entsprechend angepaßt und damit das bestehende Modell erneut generiert werden. Bei einem nicht erweiterbaren Generator hingegen kann bestenfalls noch das Modell für alle bestehenden Komponenten so angepaßt werden, daß bei erneuter Generierung Artefakte gemäß der modifizierten Architektur entstehen.

Dazu ein Beispiel: Angenommen, ein Projekt wird zunächst auf Basis der J2EE-Architektur entwickelt. Eine Komponente besteht dabei, wenn sie als *Entity Bean* ausgeführt ist, im wesentlichen aus einem *Home-Interface,* einem *Remote-Interface,* einer *Bean-Class* und einem *Deployment Descriptor*. Nun entscheidet der Architekt des Projektes im weiteren Verlauf, daß zusätzlich für alle Komponenten ein weiteres Artefakt *Smart Client Stub* definiert wird.

Mit einem erweiterbaren Generator kann nun die Abbildungsvorschrift so angepaßt werden, daß für jede Komponente eben ein solcher *Smart Client Stub* zu generieren ist. Beim nächsten Generierungslauf liegt das System in der modifizierten Architektur vor.

Mit einem nicht erweiterbaren Generator kann höchstens durch explizites Modellieren der *Smart Client Stub* Klassen ein ähnliches Ergebnis erreicht werden. Das Modell verliert dadurch aber eine seiner wichtigsten Eigenschaften, nämlich die eines vernünftigen Abstraktionsniveaus. Diese Situation ist grundsätzlich zu vermeiden, weswegen hier nur solche Generatoren betrachtet werden sollen, die grundsätzlich eine Erweiterbarkeit ihrer Abbildungsvorschrift vorsehen.

Ein weiterer wichtiger Aspekt von anpaß- und erweiterbaren Generatoren ist die Art und Weise, wie die Generierungsvorschrift formuliert und bearbeitet wird. Auch hier existieren verschiedene Varianten:
- als Quellcode in einer zu übersetzenden Programmiersprache
- als Skripten in einer interpretierten Programmiersprache
- in einem Format, das Skript- und Generierungstextteile zu mischen erlaubt (ähnlich wie bei JSPs)
- durch Zusammenstellung von Regeln über eine grafische Benutzungsschnittstelle (wie z.B. bei CodaGen)

Dabei spannen die derzeit verfügbaren Ansätze ein Spektrum auf, an dessen einem Ende mit der direkten Programmierung als Quelltext zwar die Flexibilität in der Steuerung der Generierung maximiert, andererseits die Verständlichkeit und somit die Wartbarkeit und Erweiterbarkeit reduziert wird. Am anderen Ende liegt z.B. der Ansatz von CodaGen, bei dem zwar die Generierungsvorschrift über die grafische Schnittstelle visualisiert und somit verständlich und leichter anpaßbar gemacht wird, bei dem aber die Flexibilität bei der Anpassung sehr gering ist.

Der Erfindung liegt die Aufgabe zugrunde, ein System anzugeben, das es ermöglicht, modellierte Generierungsvorschriften durch Generierung zu einem lauffähigen Generator zu transformieren, der die modellierten Generierungsvorschriften implementiert. Das System soll insbesondere dazu geeignet sein, translative Generatoren zu erzeugen.

Diese Aufgabe wird gelöst durch ein System zur Generierung von Softwareartefakten aus Modellen mit den im Anspruch 1 angegebenen Merkmalen. Vorteilhafte Ausgestaltungen sind in weiteren Ansprüchen angegeben und der nachstehenden Beschreibung von Ausführungsbeispielen zu entnehmen.

Bei der vorliegenden Erfindung handelt es sich um ein System, mit dem Generierungsvorschriften in UML modelliert und anschließend durch Generierung zu einem lauffähigen Generator transformiert werden konnen, der diemodellierten Generierungsvorschriften implementiert.

Vorausgesetzt wird die Verfügbarkeit einer objektorientierten Programmiersprache, die vorzugsweise skriptbasiert ist, oder ansonsten mit einem entsprechenden Übersetzer verfügbar gemacht wird.

Eine weitere Erläuterung der Erfindung erfolgt anhand von Zeichnungsfiguren. Es zeigen:
- Fig. 1:: Zusammenhänge zwischen den Bestandteilen der Erfindung
- Fig. 2:: Übersicht zum Generierungs-Laufzeitrahmenwerk
- Fig. 3:: Kernelemente des Regel-Metamodells
- Fig. 4:: Artefaktgenerierungsklassen im Laufzeit-Rahmenwerk
- Fig. 5:: Regel-Metamodellausschnitt für Klassenmodellierung
- Fig. 6:: Regel-Metamodellausschnitt für Klasseneigenschaften

Im folgenden soll zunächst der Grundgedanke der Erfindung näher erläutert werden. Anschließend wird die Laufzeitumgebung, in der die generierte Implementierung der modellierten Generierungsvorschrift abläuft, näher beschrieben. Dann folgt die Erläuterung des Regel-Metamodells, das die Struktur der Modelle von Generierungsvorschriften definiert. Basierend darauf wird im Anschluß erläutert, wie Instanzen dieses Regel-Metamodells durch Generierung in lauffähige Implementierungen in der zuvor beschriebenen Laufzeitumgebung umgesetzt werden. Zuletzt wird beschrieben, wie dieses System reflexiv auf sich selbst angewendet werden kann, um somit die Laufzeitumgebung für sämtliche Generierungsprozesse zu homogenisieren und die Vorteile der Modellierung von Generierungsvorschriften auch für die Generierung der Generatorimplementierungen selbst nutzen zu können.

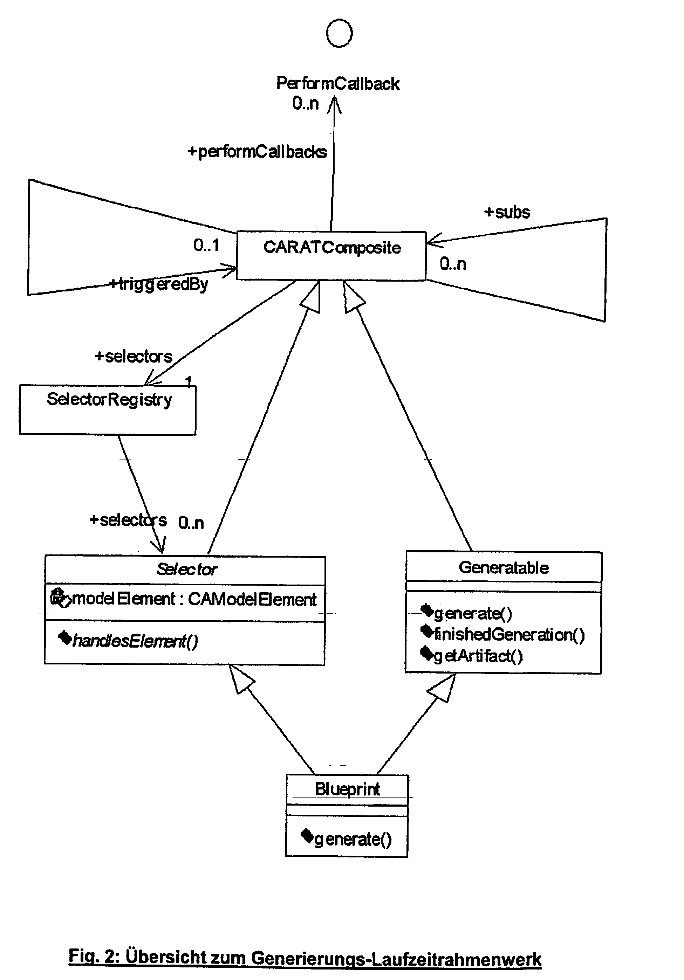

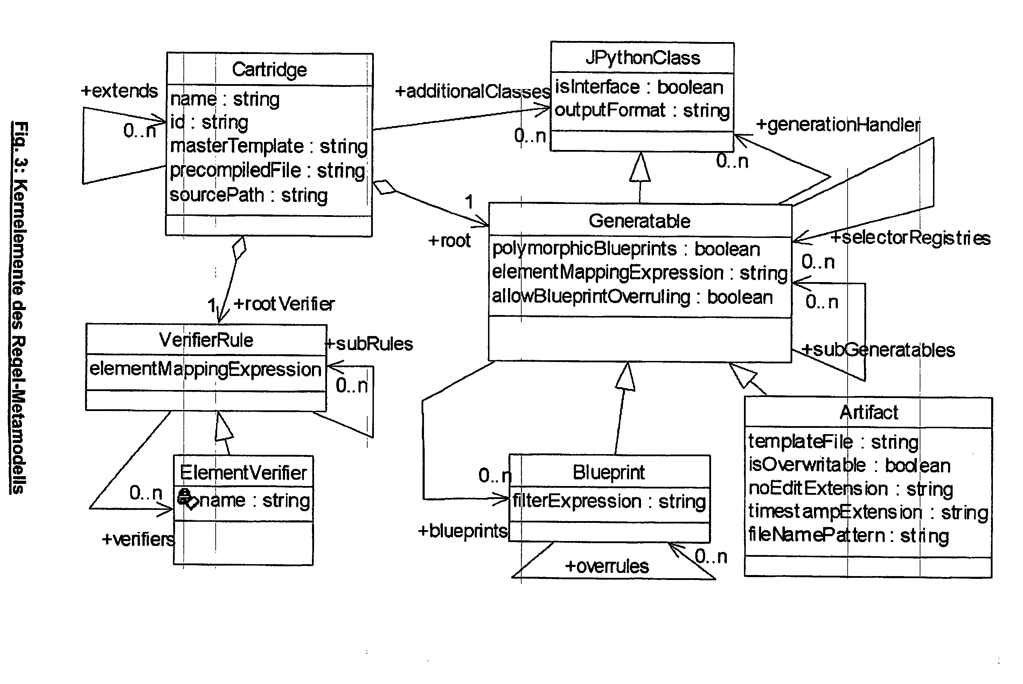

Der Gegenstand der Erfindung wird in den folgenden Abschnitten im Einzelnen für den Vorgang der *Generierung* beschrieben. Die beschriebenen Strukturen lassen sich analog übertragen und anwende auf andere modellgetriebene Funktionalitäten wie etwa die *Verifikation* von Modellen oder die Erzeugung neuer Modellelemente aus bestehenden, z.B. zum Zwecke der automatisierten Modelltransformation /-Migration oder der Erstellung von schematisch aus bestehenden Modellelementen ableitbaren, nachträglich aber manuell anzupassenden Modellanteilen. Fig. 2 und Fig. 3 enthalten exemplarisch die zur Generierung analogen Anteile für die Modell*verifikation*.

### Modellierung und Generierung der Abbildungsvorschrift

Kernidee dieser Erfindung ist es, Generierungsvorschriften (synonym: *Abbildungsvorschriften,* also die Abbildung eines Eingabemodells auf eine Reihe von Artefakten) in einem formalen Modell beschreiben zu können und dann aus diesem Modell weitgehend automatisch die Implementierung der Vorschrift zu generieren. Wird dabei das Abstraktionsniveau und die Ausdrucksmächtigkeit dieser Modelle geeignet gewählt, so wird dadurch eine leichte und dennoch flexible Anpaßbarkeit erreicht. Desweiteren werden so die Vorzüge einer modellgetriebenen Arbeitsweise übertragen auf die Entwicklung von Generatoren.

Das System besteht aus den folgenden Komponenten:
- Regel-Metamodell (beschreibt die Struktur der Modelle von Generierungsvorschriften)
- Zugriffsschnittstelle zu Modellen von Generierungsvorschriften (Instanzen des Regel-Metamodells)
- objektorientiertes Generator-Laufzeitumgebungsrahmenwerk
- Zugriffsschnittstelle auf die Anwendungs-Modelle, die als Eingabe des zu generierenden Generators dienen
- Abbildungsvorschrift von Regel-Modellen auf Generatorimplementierungen, die innerhalb des Generator-Laufzeitumgebungsrahmenwerks ablauffähig sind
- Generator, der vorgenannte Abbildungvorschrift implementiert

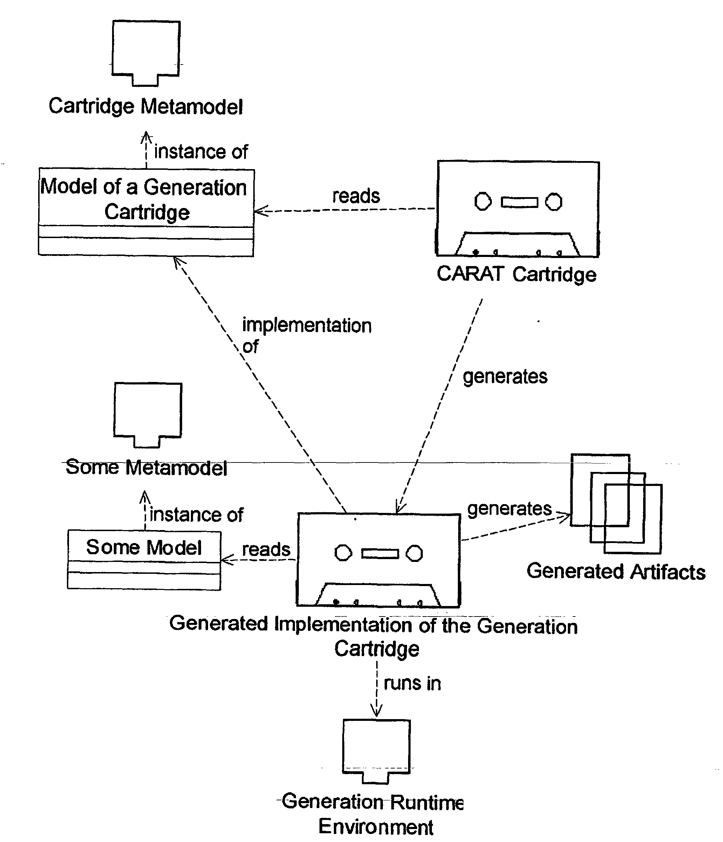

Fig. 1 visualisiert diese Zusammenhänge. Fig. 1 zeigt hierzu eine Übersicht der einzelnen Komponenten, aus denen das System besteht. Es zeigt ein Modell einer Generierungsvorschrift (*Model of a Generation Cartridge*), welches in einem formalen Regel-Metamodell *(Cartridge Metamodel*) formuliert ist. Das Modell wird dann mithilfe einer Generierungsvorschrift (*CARAT Cartridge*) transformiert in eine Implementierung der modellierten Generierungsvorschrift (*Generated Implementation of the Generation Cartridge).* Diese Generierungsvorschrift wiederum ist in der Lage, Anwendungs-Modelle (*Some Model),* die einem formalisierten Anwendungs-Metamodell (Some *Metamodel*) gehorchen, zu transformieren in eine Reihe von Artefakten *(Generated Artifacts*)*.* Dabei folgt die Transformation den Regeln, wie sie im Modell der Generierungsvorschrift *(Model of a Generation Cartridge*) aufgestellt und festgehalten wurden. Dabei läuft die Implementierung der Generierungsvorschrift *Generated Implementation of the Generation Cartridge* in einer vorgegebenen Laufzeitumgebung *(Generation Runtime Environment)* ab, über welche die *CARAT Cartridge* bereits Kenntnisse haben muß.

### Laufzeitumgebung und Rahmenwerk für die Generierung

Aus gesammelten Erfahrungen im Bereich des Generatorbaus lassen sich sinnvolle Grundmuster und Abstraktionen ableiten, die für alle zu generierenden Generatorimplementierungen gleichermaßen anwendbar sind. Mit den Mitteln der Objektorientierung wird aus diesem Grund ein Rahmenwerk formuliert, zu dem die generierten Generatorimplementierungen Instanziierungen darstellen. Eine Implementierung des Rahmenwerks sollte in einer Skriptbasierten Programmiersprache vorliegen, da sich so die bereits angeklungene Erweiterbarkeit durch Dritte effektiv adressieren läßt. In diesem Abschnitt sollen die Kernabstraktionen und Muster dieses Rahmenwerks erläutert werden, da sie für das Verständnis der nachfolgend beschriebenen Generierung von Instanziierungen dieses Rahmenwerks wichtige Voraussetzung sind.

### Komposite Struktur und Selektoren als Grundmuster

Kern des Rahmenwerks ist eine Implementierung des *Composite*-Entwurfsmusters (vgl, Erich Gamma, Richard Helm, Ralph Johnson, and John Vlissides, *Design Patterns: Elements of Reusable Object-Oriented Software,* Addison-Wesley, 1995), wie es in Fig. 2 dargestellt ist.

Fig. 2 zeigt das Modell der Kernabstraktionen des Laufzeit-Rahmenwerks für die Generierung (in Fig. 1 bezeichnet als *Generation Runtime Environment). Zu* sehen sind die zentrale Klasse für die Implementierung des *Composite*-Entwurfsmusters (*CARATComposite*) mit ihren Spezialisierungen *Generatable* und *Selector.* Es ist zu sehen, wie *Selector*-Instanzen mit einer Instanz der *CARATComposite-Klasse* assoziiert werden können.

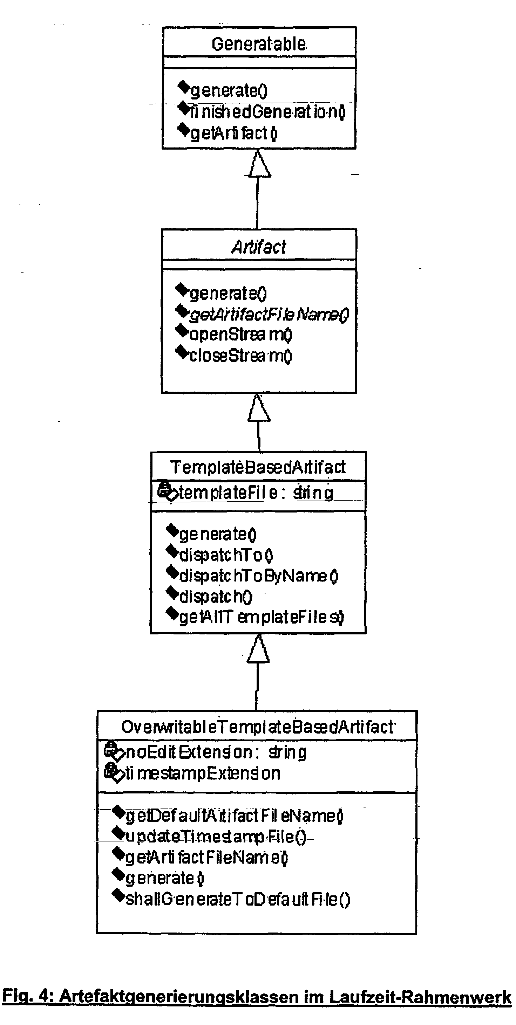

Fig. 4 zeigt, welche weiteren Spezialisierungen von Generatable im Laufzeit-Rahmenwerk für die Generierung existieren und stellt somit eine Erweiterung zu Fig. 2 dar. Es sind die verschiedenen Arten der Artefaktgenerierung dargestellt, insbesondere die schablonenbasierte (*TemplateBasedArtifact*) und die schablonenbasierte mit zusätzlicher Zeitstempelkontrolle *(OverwritableTemplateBasedArtifact).*

Der Generierungsprozeß läßt sich komposit zerlegen, typischerweise entlang der Struktur der zu generierenden Artefakte. Der Generierungsprozeß startet an der Wurzel des Kompositionsbaums durch Aufruf der *perform-*Operation, wobei das Modellelement, für das etwas zu generieren ist, als Argument übergeben wird, außerdem eine sogenannte *beforeOperation* und einer *afterOperation.* Diese bezeichnen die Operationen, die jeweils vor und nach dem generischen Durchlaufen der kompositen Struktur für das gegebene Kompositum auszuführen sind.

Durch die Flexibilität bei der Angabe der *before-* und *afterOperation* kann dasselbe komposite Muster neben der eigentlichen Generierung auch noch für andere Zwecke verwendet werden, etwa für die Modell*verifikation* oder die Generierung neuer Modellelemente aus bestehenenden Modellelementen. Die Basisimplementierung des kompositen "Abstiegs" kann dabei jedoch immer unverändert zur Anwendung kommen.

Zusätzlich zur regulären *Composite*-Struktur nach [Erich Gamma, Richard Helm, Ralph Johnson, and John Vlissides, *Design Patterns: Elements of Reusable Object-Oriented Software*, Addison-Wesley, 1995] ist noch folgende Besonderheit zu erwähnen: Jedes Kompositum verfügt über eine sogenannte *SelectorRegistry* (siehe Fig. 2). In ihr sind sogenannte *Selektoren* angemeldet, die für ein gegebenes Modellelement entscheiden können, ob sie sich dafür "zuständig fühlen". Diese Entscheidung wird in der Operation *handlesElement* implementiert, die jeder Selektor aufweist. Die SelectorRegistry kann nun dazu verwendet werden, für ein gegebenes Modellelement die Teilmenge derjenigen der registrierten Selektoren zu bestimmen, die sich dafür zuständig fühlen. Durch die Einführung der SelectorRegistry ist es möglich, dort einige sinvolle und nützliche Zusatzregeln zum Filtern der Selektoren-Menge zu hinterlegen. Zwei Regeln, die für jede SelectorRegistry optional an- oder abgeschaltet werden können, sind von besonderer Bedeutung:
1) Fühlen sich im Kontext einer SelectorRegistry mehrere Selektoren zuständig, die zueinander in einer Vererbungsbeziehung stehen, so wird nur der speziellere Selektor angewendet.
2) Es können im Kontext einer SelectorRegistry explizite gerichtete Überstimmungsbeziehungen zwischen Paaren von Selektoren festgelegt werden. Fühlen sich zwei Selektoren für ein gegebenes Modellelement zuständig, und für dieses Paar existiert eine Überstimmungsbeziehung, so wird nur der überstimmende Selektor angewendet.

Die *perform*-Operation führt zunächst durch Aufruf der Operation *mapModelElement* eine optionale Navigation und Filterung mit dem übergebenen Modellelement durch. Die Standardimplementierung dieser Operation liefert das übergebene Modellelement unverändert zurück. Jedoch können Unterklassen durch Redefinition dieser Operation anderweitige Navigationen und Filter implementieren. Beispiel: Es wird ein Classifier-Modellelement als Eingabe erwartet. Jedoch soll durch das vorliegende Kompositum etwas für die Operationen des Classifiers generiert werden. Dann kann die Implementierung von *mapModelElement* die Menge der zum übergebenen Classifier gehörigen Operationen als ihr Ergebnis zurückliefern. Ein anderes Beispiel: Ein Kompositum soll nur etwas für solche Classifier generieren, deren Name eine bestimmte Eigenschaft erfüllt. Dann kann die *mapModelElement-*Implementierung des Kompositums zunächst prüfen, ob es sich überhaupt um einen Classifier handelt, und falls ja, zusätzlich den Namen prüfen. Nur wenn die Bedingungen erfüllt sind, wird der Classifier zurückgeliefert; ansonsten wird eine leere Menge zurückgegeben.

Nach der Abbildung und Filterung werden die resultierenden Modellelemente der Reihe nach an die spezifizierte *beforeOperation* übergeben (wenn eine spezifiziert wurde), in der das Kompositum seinen eigenen Beitrag zur Generierung berechnen kann. Dies kann in Form einer seiteneffektfreien Berechnung eines Ergebnisses bestehen und / oder in der gezielten Erzeugung und Ausgabe von generierten Textbestandteilen, kann aber auch ohne Seiteneffekt und Ergebnis bleiben, z.B. wenn dieses Kompositum ausschließlich die Funktion der Komposition ohne eigenen Beitrag übernimmt.

Anschließend wird die weitere Verarbeitung delegiert an die registrierten und von der SelectorRegistry für zuständig erachteten Selektoren und an alle Subkomposita, indem ihre jeweilige *perform*-Operation mit dem aktuellen Modellelement und der *before-* und *afterOperation* als Parameter aufgerufen wird. Die Ergebnisse werden zu der Ergebnisliste, die bereits das Ergebnise der ausgeführten *beforeOperation* enthält, hinzugefügt. Da die Selektoren und Subkomposita dieselbe Standardimplementierung von *perform* verwenden, verläuft deren Beitrag zur Generierung rekursiv nach dem hier beschriebenen Muster ab.

Nachdem für alle aus *mapModelElement* resultierenden Modellelemente die *beforeOperation* aufgerufen und an alle zuständigen Selektoren und Subkomposita delegiert wurde, wird die *afterOperation* aufgerufen (falls eine spezifiziert wurde), die als Parameter das Modellelement (bevor es von *mapModelElement* transformiert / gefiltert wurde) und die bisherige Ergebnisliste übergeben. Hier besteht nun die Möglichkeit, aus den bis dahin möglicherweise seiteneffektfrei berechneten Ergebnisse einen Generierungsseiteneffekt auszulösen und die Ergebnisse zu konsolidieren. Das Ergebnis der *afterOperation* stellt das Ergebnis der gesamten *perform*-Operation dar. Die Standardimplementierung verwendet die bis dahin berechnete Ergebnisliste unverändert als Ergebnis. Ein typisches Beispiel, das die Notwendigkeit dieser Lösung demonstriert: Angenommen, es soll eine Oberklassenliste für eine Klassendeklaration generiert werden. Die Inhalte der Oberklassenliste werden von Subkomposita und Selektoren berechnet. Da diese aber unabhängig voneinander sind und auch sein sollen, können sie nicht wissen, ob und welche Beiträge die anderen Selektoren und Subkomposita zur Oberklassenliste leisten. Andererseits richtet sich in den meisten Programmiersprachen die Syntax für eine Oberklassenliste nach der Anzahl der Oberklassen, wobei wesentliche Unterschiede zwischen den Kardinalitäten 0, 1 und 2 bestehen. Daher kann die Generierungssyntax erst festgelegt werden, wenn die Ergebnisse aller beitragenden Subkomposita und Selektoren bekannt sind. Zu diesem Zweck kann dann die *afterOperation* zum Einsatz kommen.

Für die Bereiche *Generierung* und *Verifikation* sieht das Rahmenwerk bereits entsprechende Muster für die Namen der *before-* und *afterOperation* vor, die jeweils getrennt für Selektoren und allgemeine Komposita deklariert sind. Weitere Bereiche können nach dem gleichen Muster hinzugefügt werden.

### Wählbarkeit der Artefakte entlang der kompositen Struktur

Die Komposite Struktur enthält für den Bereich der Generierung insbesondere die Menge der zu generierenden Artefakte, die potentiell wieder zu geeigneten kompositen Mengen zusammengefaßt sein können. Die Kompositionsstruktur eignet sich, um darauf für die Anwender der Generierungsvorschrift eine Konfigurationsoption vorzusehen. Damit wird es den Anwendern möglich, etwa die Generierung bestimmter Artefakte oder bestimmter kompositer Gruppen von Artefakten während eines Generatorlaufs zu unterdrücken.

Technisch ist dazu ein entsprechendes boolesches Attribut auf allen Komposita (somit auch insbesondere den Selektoren) nötig, desweiteren die Prüfung dieses Attributs in der *perform*-Operation. Die Konfiguration kann dann programmatisch erfolgen, so daß beispielsweise auch eine grafische Benutzungsschnittstelle dafür vorgesehen werden kann.

### Konfiguration einer Generierungsvorschrift

Die Bildung der Kompositionshierarchie inklusive der Registrierung der Selektoren bei den betreffenden SelectorRegistries stellt die Konfiguration der Generierungsvorschrift dar. Das Rahmenwerk stellt Schnittstellen dafür zur Verfügung, so daß die Konfiguration programmatisch vorgenommen werden kann.

Es sei noch am Rande erwähnt, daß es besonders für die Selektoren sinnvoll ist, für jede Verwendung zur Laufzeit eine eigene Kopie eines Selektorobjekts anzufertigen, da dann als Teil seines Zustands das aktuelle Modellelement verwendet verden kann. Aber auch für die anderen Komposita bietet sich dies an, um zur Laufzeit die tatsächlichen Aufrufbeziehungen und die dabei vorgenommenen Transformationen und Filterungen der Modellelemente rückverfolgen zu können. Wird also die Konfiguration durch Instanzen der verschiedenen Komposita- und Selektorklassen beschrieben, so sollten es nicht diese Instanzen sein, auf denen dann zur Laufzeit die tatsächliche Funktionalität ausgeführt wird. Sie dienen stattdessen eher gemäß dem *Prototype*-Entwurfsmuster [Gamma et al.] als Kopiervorlage für die zu erstellenden und zur Laufzeit zu verwendenden Instanzen.

### Regel-Metamodell für Generierungs- / Abbildungsvorschriften, UML-Profil

Das Regel-Metamodell für die Modellierung der Generierungsvorschriften entscheidet maßgeblich über die Ausdrucksstärke, Flexibilität, Handhabbarkeit und Verständlichkeit der darin ausgedrückten Modelle. Aufgrund der existierenden Werkzeuglandschaft im Modellierungsbereich erscheint es angebracht, zusätzlich zu dem Regel-Metamodell ein entsprechendes Profil für UML anzugeben, mit dem Instanzen des Regel-Metamodells mit einem gewöhnlichen UML-Werkzeug erstellt, bearbeitet und visualisiert werden können. Auch die Auslegung dieses Profils entscheidet, wie das Regel-Metamodell selbst, maßgeblich über die vorgenannten Faktoren.

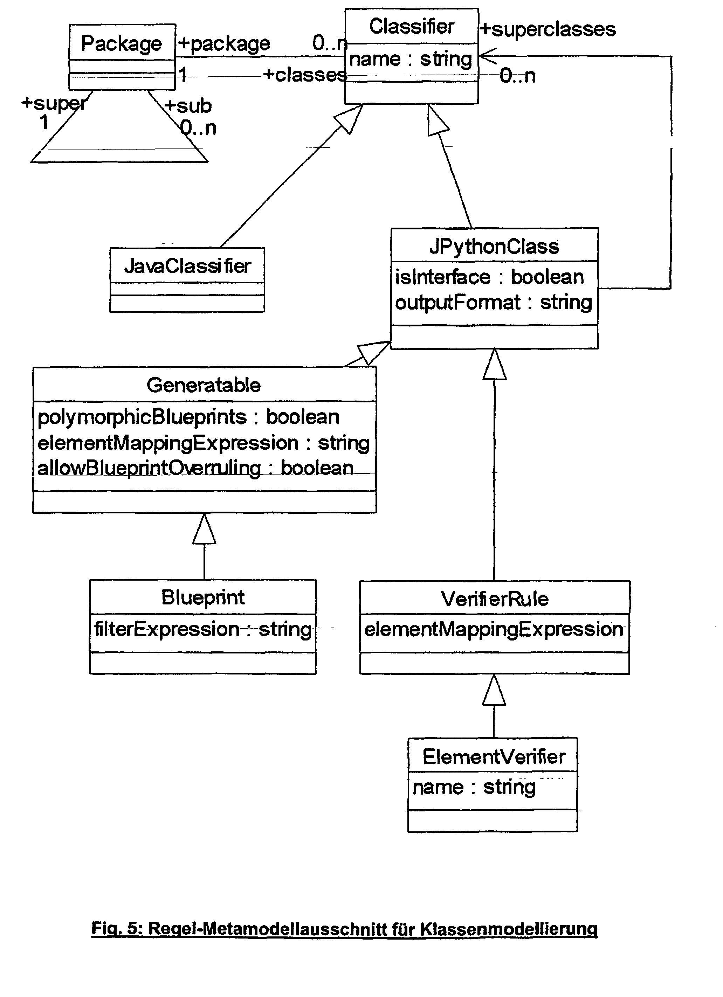

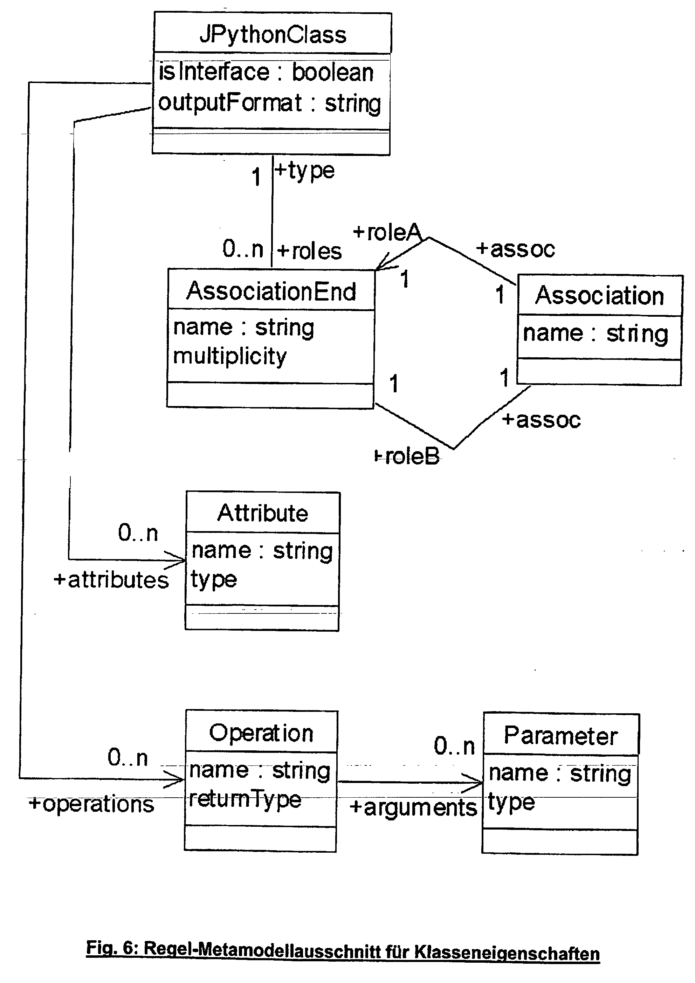

Fig. 3, Fig. 5 und Fig. 6 zeigen das Regel-Metamodell, zu dem konform die Modelle der Generierungsvorschriften beschrieben werden müssen. In der in Fig. 1 dargestellten Übersicht ist dieses Regel-Metamodell bezeichnet als Cartridge Metamodel. Es unterstützt die Modellierung von Klassen im wesentlichen angelehnt an das UML-Metamodell (siehe vor allem die Regel-Metamodellskizzen in Fig. 5 und Fig. 6, die Paket- und Klassenmodellierung darstellen). Unterstützt wird die Modellierung von Operationen mit ihren Argumenten, Attributen und Assoziationen. Außerdem sieht das Regel-Metamodell einen Metatyp *Cartridge* für die Repräsentation der gesamten Generierungsvorschrift vor (siehe Fig. 3). Instanzen dieses Typs geben insbesondere das Wurzelelement der zuvor beschriebenen kompositen Generierungshierarchie an, was im Regel-Metamodell durch die von Cartridge ausgehende Association zum Metatyp *Generatable* mit dem Rollennamen *root* erfaßt ist.

Die komposite Struktur kann mit Instanzen des Metatyps Generatable und seiner abgeleiteten Metatypen *Blueprint* und *Artifact* modelliert werden. Dabei wird die dem Composite-Entwurfsmuster entsprechende Kompositionsbeziehung beschrieben durch die reflexive Regel-Metamodell-Assoziation auf Generatable mit dem Rollennamen *subGeneratables.* Die Inhalte der SelectorRegistry des Kompositums, das durch eine Instanz des Metatyps *Generatable* repräsentiert wird, werden durch die Regel-Metamodell-Assoziation von Generatable zu *Blueprint* mit dem Rollennamen *blueprints* beschrieben. Es ist zu beachten, daß die SelectorRegistry nicht explizit im Regel-Metamodell auftaucht, was die Modellierung der Inhalte der SelectorRegistries vereinfacht.

Das Regel-Metamodell sieht auch die Modellierung der Überstimmungsbeziehungen zwischen Selektoren vor. Dies wird durch die reflexive Assoziation auf *Selector* im Regel-Metamodell mit dem Rollennamen *overrules* beschrieben.

Die Konfigurationsoptionen der SelectorRegistry des durch die *Generatable*-Instanz repräsentierten Kompositums können allerdings direkt als Attribut der *Generatable*-Instanz ausgedrückt werden. Dazu sind die Attribute *polymorphicBlueprints* und *allowBlueprintOverruling* vorgesehen. Der Einfluß dieser Optionen auf die Auswahl der Selektoren aus der Registry wurden zuvor bereits beschrieben.

Wie zuvor beschrieben kann jedes Kompositum eine Funktion zur Transformation und Filterung der an *perform* übergebenen Anwendungs-Modellelemente implementieren (mapMode/Eement). Die Erprobung der dieser Erfindung zugrundeliegenden Konzepte hat gezeigt, daß es zwei typische Muster für Filterung und Transformation gibt:
- Filterung eines Anwendungs-Modellelements basierend auf seinem Anwendungs-Metatyp und seinem Stereotyp
   Beispiel: "nur solche Anwendungs-Modellelemente, die vom Anwendungs-Metatyp *Classifier* sind und den Stereotyp *Bean* haben"
- Verfolgung einer Anwendungs-Metamodellassoziation
   Beispiel: auf einem Anwendungs-Modellelement vom Anwendungs-Metatyp *Classifier* Verfolgung des Assoziationsendes mit dem Rollennamen *operations,* um alle zum Classifier gehörigen Operationen zu erhalten

Erlaubt man noch zusätzlich eine Kombination und Verkettung dieser beiden Grundmuster, so läßt sich so bereits der größte Teil der typischerweise benötigten Transformations- und Filterregeln ausdrücken. Aus diesem Grund wurde im Regel-Metamodell das Attribut *elementMappingExpression* auf *Generatable* eingeführt. Es erlaubt, im Regel-Modell eines Kompositums eine Transformations- und Filterregel, aus der sich eine Implementierung der *mapModelElement*-Operation generieren läßt, deskriptiv zu hinterlegen. Als Syntax für diese Regelausdrücke kann z.B. verwendet werden:
**rule ::= [ step [ ' . ' step ]* ]**
**step ::= '(' metatype ',' stereotype ')' | rolename**

Dabei bezeichnet eine leere Regel, die keine *step*-Elemente enthält, eine Identitätsabbildung, die als Ergebnis das übergebene Modellelement liefert.

Der gleiche Mechamismus kann für die Generierung der *handlesElement*-Operation auf Selektoren verwendet werden. Darum gibt es auf dem Metatyp *Blueprint* ebenfalls ein Attribut, *filterExpression*, das in der gleichen Syntax wie *Generate.elementMappingExpression* ausgefüllt werden kann. Die *handlesElement*-Operation wird dann so generiert, daß sie *True* zurückliefert, wenn die aus der angegebenen Regel abgeleitete Transformation / Filterung mindestens ein Modellelement zurückliefert. Wird kein Ausdruck im Modell vorgegeben, so wird eine *handlesElement*-Implementierung generiert, die immer *True* zurückliefert aber manuell angepaßt werden kann.

Die Generierung von Artefakten wird von speziellen Komposita gesteuert, deren Modellierung im Regel-Metamodell durch den Metatyp *Artifact* beschrieben ist. Die aus diesem Modellelementen zu generierenden Implementierungen arbeiten eng mit dem Generator zusammen. Dabei geht es im wesentlichen um die Steuerung der Ausgabeströme für die einzelnen zu generierenden Artefakte und die Unterstützung sogenannter *geschützter Bereiche ("Protected Areas"),* die nach der Generierung manuell verändert werden dürfen, wobei diese Änderungen bei nachfolgender Neugenerierung erhalten bleiben. Wird im Modell ein nicht leerer Wert für das Attribut *templateFile* spezifiziert, dann teilt das spezielle Kompositum für die Artefaktgenerierung außerdem dem Generator die Lokation der Schablonendatei *(Template)* mit, welche die Artefaktinhalte als Mischung aus Klartext und Skriptanteilen beschreibt.

Weitere Konfigurationsoptionen für die Artefaktgenerierung sind im Regel-Metamodell vorgesehen. So gibt es Fälle, wo der Mechamismus der *geschützten Bereiche* nicht sinnvoll greift, z.B. weil zu erwarten ist, daß sehr große Anteile der generierten Datei manuell nachbearbeitet werden müssen. In diesem Fall kann es opportun sein, statt geschützter Bereiche nach entdeckten manuellen Änderungen die Datei bei neuerlichem Generieren nicht zu überschreiben, sondern stattdessen unter modifiziertem Namen neu zu generieren, wobei die manuell veränderte Datei dann durch die neuerliche Generierung nicht mehr verändert wird. Dies kann technisch durch Zeitstempel im Dateisystem erfolgen, welche den letzten Generierungszeitpunkt der Originaldatei festhalten, so daß am Änderungsdatum der Originaldatei dann festgestellt werden kann, ob es manuelle Änderungen gab oder nicht. Ob diese Logik verwendet werden soll, wird durch das im Regel-Metamodell vorgesehene Attribut *isOverwritable* erfaßt. Die Konventionen zur Bildung der Namen der Zeitstempeldatei und der Datei mit modifiziertem Namen können in den im Regel-Metamodell vorgesehenen Attributen *timestampeExtension* und *noEditExtension* hinterlegt werden.

Die Regel-Metamodellkonstrukte können mittels des folgenden UML-Profils in UML-Modellen ausgedrückt werden:

| | |
|---|---|
| Regel-Metamodellelement | Abbildung in UML |
| Metatyp *Cartridge* | UML Typ Class mit Stereotyp *CARATCartridge* |
| Metatyp *Generatable* | UML Typ Class mit Stereotyp *CARATGeneratable* |
| | *CARATGeneratable* |
| Metatyp *Blueprint* | UML Typ Class mit Stereotyp *CARATBlueprint* oder *CARA TArtifactSet* |
| Metatyp Artifact | UML Typ Class mit-Stereotyp *CARATArtifact* |
| Attribute eines Metatyps | UML Property mit gleichem Namen auf der UML Class |
| Assoziation von *Generatable* auf *Blueprint* | UML *Association* mit Stereotyp *Blueprint,* navigierbar vom *CARATBlueprint-Element* zum CARATGeneratable-Element |
| Assoziation von *Generatable* auf Generatable, Rolle *subGeneratables* | UML *Association* mit Stereotyp *Sub,* navigierbar vom Subelement zum übergeordneten Element |
| Assoziation von *Generatable* auf *Generatable,* Rolle *selectorRegistries* | UML *Association* mit Stereotyp *SelectorRegistry* |
| Assoziation von *Blueprint auf* UML Association *Blueprint* | mit Stereotyp *overrules*, navigierbar vom überstimmenden zum überstimmten Element |
| Assoziation von *Cartridge* auf *Generatable* | UML *Association* mit Stereotyp *CARATRoot,* navigierbar vom *CARATCartridge*-Element zum *CARATGeneratable-Element* |

Die restlichen Anteile des Regel-Metamodells (siehe Fig. 5) werden ohne Veränderung im UML-Metamodell ausgedrückt.

### Generierung der Implementierung zur modellierten Generierungsvorschrift

Wie bereits in Fig. 1 zu sehen enthält das System eine Generierungsvorschrift (in Fig. 1 bezeichnet mit *CARAT Cartridge),* mit der Regel-Modelle, die dem zuvor beschriebenen Regel-Metamodell genügen, in Implementierungen der modellierten Generierungsvorschrift transformiert werden können. Zum Verständnis: Es sind also zwei verschiedene Generierungsvorschriftsimplementierungen beteiligt, von denen die eine durch die andere generiert wird. Die Generierungsvorschrift, die hierbei die Generierung übernimmt, soll, um Verwechslungen zu vermeiden, im folgenden wie in Fig. 1 mit *CARAT Cartridge* bezeichnet werden. In diesem Abschnitt wird beschrieben, wie diese CARAT Cartridge strukturiert ist.

Wesentliches Ziel bei der Generierung der Implementierung einer Generierungsvorschrift ist es, daß diese Implementierung zu dem zuvor beschriebenen und in Fig. 1 mit *Generation Runtime Environment* bezeichneten Laufzeit-Rahmenwerk "paßt", es also verwendet und gemäß der Definitionen im Modell (in Fig. 1 bezeichnet mit *Model of a Generation Cartridge)* der Generierungsvorschrift erweitert. Insofern hat also die CARAT Cartridge Kenntnis über die Strukturen des Laufzeitrahmenwerks.

### Generierung von Klassen, Operationen, Attributen und Assoziationen

Diese bereits in UML vorhandenen Elemente werden auf natürliche Weise in die Zielsprache umgesetzt. Klassen-im Modell werden samt ihrer Vererbungsbeziehungen auf entsprechende Klassen der Zielsprache abgebildet, ebenso Operationen mit ihrer Schnittstelle. Bei skriptbasierten Zielsprachen spielt oftmals die Typisierung von Schnittstellen keine oder nur eine untergeordnete Rolle. In diesem Fall werden etwaige im Modell angegebene Typen von Parametern oder Resultaten ignoriert.

Bei Operationen ist weiterhin zu beachten, daß ihre Implementierung *nicht* im Modell hinterlegt ist. Sie ist nachträglich manuell im generierten Rumpf der Operation einzufügen. Idealerweise unterstützt die Laufzeitumgebung ein Konzept wie die etwa vom Produkt *ArcStyler* bekannten *geschützten Bereiche* (*Protected Areas*). Dies sind durch eindeutige Zeichenfolgen geklammerte Bereiche im generierten Artefakt, in dem manuelle Änderungen vorgenommen werden dürfen, die beim erneuten Generieren derselben Datei nicht überschrieben sondern übernommen werden. Dies ist jedoch keine zwingende Voraussetzung für das hier beschriebene System.

Für Attribute wird jeweils eine lesende und eine schreibende Zugriffsmethode generiert, die auf der Basis einer nach außen nicht sichtbaren Instanzvariable der zugehörigen Klasse Implementiert sind.

Für Assoziationen werden auf den navigierbaren Seiten lesende und verändernde Zugriffsmethoden generiert, die bei verändernden Zugriffen auch die Konsistenz der Assoziationsbeziehung sicherstellen. Dies ist insbesondere bei bidirektional navigierbaren Assoziationen, bei denen der Zustand der Assoziation möglicherweise aus Effizienzgründen redundant gepflegt wird, zu beachten.

Wie nachfolgend beschrieben werden wird, werden darüberhinaus für spezielle Submetatypen, von denen zwei bereits in Fig. 5 gezeigt sind (nämlich *Generatable* und *Blueprint),* zusätzliche Dinge generiert, wie unter anderem in den nachfolgenden Unterabschnitten beschrieben wird.

### Schnittstellenklasse zum Aufruf der Funktionalität der Generierungsvorschrift

Für die explizit im Modell vorzusehende Repräsentation der Generierungsvörschrift wird eine Klasse generiert, welche als Fassade (siehe Facade-Entwurfsmuster bei [Gamma et al.]) agiert. Sie stellt eine kompakte Schnittstelle zur Funktionalität der Generierungsvorschrift zur Verfügung. Der Klassenname leitet sich aus dem Namen des die Generierungsvorschrift repräsentierenden Modellelements ab. Es werden die Operationen *describe* und *call* in den Rumpf dieser Klasse hineingeneriert, die es erlauben, zur Laufzeit die von der Generierungsvorschrift angebotenen Funktionen zu erfragen.

Dabei kann der *describe*-Methode eine Menge von Modellelementen als Argument übergeben werden, für die berechnet wird, welche Funktionen die Generierungsvorschrift für diese Menge durchzuführen in der Lage ist. Aus der zurückgegebenen Menge von möglichen Funktionen kann eine, zusammen mit der gleichen Menge von Modellelementen, an die *call*-Operation übergeben werden, die diese Funktion dann ausführt.

Dieser dynamische Aufrufmechanismus sorgt unter anderem dafür, daß eine generische grafische Benutzungsschnittstelle entwickelt werden kann, die erst zur Laufzeit eine Cartridge nach den angebotenen Funktionalitäten befragt, die Optionen dem Anwender zur Auswahl stellt und dann auf Anweisung des Anwenders die gewählte Funktionalität ausführt.

### Klassen für die modellierten Komposita, Subkomposita und Selektoren

Für jedes modellierte Kompositum und damit insbesondere auch für jeden Selektor wird eine Klasse generiert, die Unterklasse einer bestimmten Klasse des Laufzeitrahmenwerks ist. Die Auswahl der Oberklasse erfolgt abhängig von der Beschaffenheit des Modellelements, welches das Kompositum repräsentiert:
- Spezifiziert das Modellelement eine oder mehrere Oberklassen explizit, so werden diese im Generat als Oberklasse spezifiziert.
- Metatyp Generatable: Solche Elemente erhalten als Oberklasse die Rahmenwerkklasse *Generatable,* die ihrerseits Unterklasse von *CARATComposite* ist (siehe Fig. 2).
- Metatyp *Blueprint:* Solche Elemente erhalten als Oberklasse die Rahmenwerkklasse *Blueprint,* die ihrerseits Unterklasse sowohl von *Generatable* als auch von *Selector* ist.
- Metatyp *Artifact*: Hier wird unterschieden nach den auf dem Modellelement eingestellten Optionen. Ist kein Wert für das Attribute *templateFile* angegeben, so wird als Oberklasse *Artifact* verwendet. Ist ein nicht leerer Wert angegeben, und ist der Wert des Attributs *is Overwritable False,* so wird als Oberklasse *TemplateBasedArtifact verwendet,* anderenfalls *OverwritableTemplateBasedArtifact.* In den beiden letztgenannten Fällen wird ein Konstruktor für die Klasse generiert, in der das *templateFile-*Attribut der zu initialisierenden Instanz mit dem aus dem Modell stammenden Wert des Attributs *templateFileName* belegt. Darüberhinaus wird für den letzgenannten Fall die Initialisierung der bereits beschriebenen Dateinamenskonventionen aus den Attributen des Modellelements initialisiert.
- Erbt das Modellelement bereits von einem anderen Modellelement, für das durch die vorgenannten Generierungsregeln dieselbe Oberklasse festgelegt wird, so wird auf die erneute Generierung dieser Oberklassenbeziehung verzichtet, da sie redundant wäre.

Für jedes Modellelement vom Metatyp *Generatable* erfolgt zuätzlich eine Prüfung des Attributs *elementMappingExpression.* Ist hier ein nichtleerer Wert angegeben oder verfügt das Modellelement nicht über eine Oberklasse (direkt oder transitiv) mit Metatyp *Generatable* oder ein davon abgeleiteter Metatyp (z.B. *Blueprint),* so wird eine *mapModelElement*-Operation in die generierte Klasse eingefügt. Die generierte Implementierung setzt die im *elementMappingExpression-Attribut* spezifizierten Transformations- und Filterregeln um.

Für jedes Modellelement vom Metatyp *Blueprint* erfolgt zuätzlich eine Prüfung des Attributs *filterExpression.* Ist hier ein nichtleerer Wert angegeben oder verfügt das Modellelement nicht über eine Oberklasse (direkt oder transitiv) mit Metatyp *Blueprint* oder ein davon abgeleiteter Metatyp, so wird eine handlesElement-Operation in die generierte Klasse eingefügt. Die generierte Implementierung setzt die im *filterExpression-Attribut* spezifizierten Transformations- und Filterregeln um.

Ansonsten werden für diese speziellen Regel-Metamodell-Subtypen der Metatyps *Class* (siehe Fig. 5) die üblichen Elemente wie die Rümpfe für die modellierten Operationen sowie die Attribut- und Assoziationszugriffsmethoden wie bereits zuvor beschrieben generiert.

### Registrierung der Subkomposita und Selektoren, Konfiguration der Selector Registries

Die Registrierung von Subkomposita und Selektoren bei den entsprechend übergeordneten Komposita erfolgt in einer Operation namens *setUp,* die in die Schnittstellenklasse der Generierungsvorschrift hineingeneriert wird (s.o.). Diese muß bei der Initialisierung der Generierungsvorschrift und vor der ersten Verwendung einer sonstigen Funktionalität der Generierungsvorschrift ausgeführt werden.

Die Generierung der *setUp*-Operation erfolgt, ausgehend von der Assoziation zwischen dem *Cartridge*-Modellelement zum Wurzelobjekt der Generierungshierarchie, basierend auf den Assoziationen im modell zwischen den Komposita untereinander und zwischen Komposita und Selektoren. Es wird dabei rekursiv vorgegangen. Für jedes Modellelement vom metatyp *Generatable* oder irgendeinem diesen Metatyp spezialisierenden Metatyp wird in die *setUp-*Operation Code generiert, der bei seiner Ausführung folgendes durchführt:
- Anlegen einer Instanz der aus dem Modellelement generierten Klasse (s.o.). Diese Instanz sei im folgenden mit *x* bezeichnet.
- für alle in der Rolle *subGeneratables* assoziierten Komposita: rekursiv diese Schritte durchführen, wenn zu dem assoziierten Modellelement nicht bereits eine Instanz angelegt wurde, sonst diese Instanz verwenden; dann die resultierende Instanz in die *subs*-Rolle (siehe Fig. 2) von *x* eintragen
- für alle in der Rolle *blueprints* assoziierten *Blueprint*-Modellelemente: rekursiv diese Schritte durchführen, wenn zu dem assoziierten Modellelement nicht bereits eine Instanz angelegt wurde, sonst diese Instanz verwenden; dann die resultierende Instanz in die zu *x* gehörige *BlueprintRegistry* eintragen (genau: in deren Rolle *blueprints*).
- für alle Paare in der Rolle *blueprints* assoziierten *Blueprint*-Modellelemente, von denen eines in der *overrules-*Rolle des anderen assoziiert ist, Hinterlegen dieser Beziehung in der *SelectorRegistry* von *x*

Durch Ausführung des so generierten Codes entsteht also ein gerichteter Graph von miteinander assoziierten Objekten, der eine Wurzel hat. Diese Wurzel wird in der Klasse, zu der die generierte setUp-Operation gehört, nach Ausführung der *setUp*-Operation gespeichert. Wie bereits zuvor angesprochen ist es vorteilhaft, bei der schlußendlichen Ausführung der Funktionalität der generierten Implementierung der Generierungsvorschrift Kopien der Objekte in diesem Graph zu erstellen. Die im Laufzeit-Rahmenwerk vorgesehene reflexive Assoziationsbeziehung auf *CARATComposite* mit dem Rollennamen *triggeredBy* (vgl. Fig. 2) erlaubt es, die tatsächlichen Aufrufbeziehungen auf den Kopien festzuhalten, und jedem Selektor seinen individuellen Zustand in Form des Attributs *modelElement* zu geben.

### "Bootstrapping"-Prozeß

Wie in Fig. 1 zu erkennen spielen beim beschriebenen System die Implementierungen zweier Generierungsvorschriften eine Rolle:
- die der mit *CARAT Cartridge* bezeichneten Vorschrift zur Umwandlung von Modellen von Generierungsvorschriften in die zugehörige Implementierung
- die der mit der *CARAT Cartridge* aus einem Modell einer Generierungsvorschrift generierte zugehörige Implementierung

Da die *CARAT Cartridge* also in der Lage ist, Implementierungen von Generierungsvorschriften zu generieren, und sie selbst auch eine Implementierung einer Generierungsvorschrift ist, ist es möglich, ein Modell der *CARAT Cartridge* zu erstellen und durch reflexive Anwendung die *CARAT Cartridge* "mit sich selbst" zu generieren.

Dies hat den wesentlichen Vorteil, daß dadurch auch die *CARAT Cartridge* leichter zu verstehen und damit leichter zu pflegen und erweitern wird.

Da zu Beginn der Entwicklung der *CARAT Cartridge* selbige hoch nicht zur Verfügung steht, muß eine erste Implementierung basierend auf dem in Fig. 2 gezeigten Laufzeit-Rahmenwerk manuell erstellt, also in Form von Quellcode, der das Rahmenwerk erweitert / instanziiert, geschrieben werden. Erst wenn diese erste Implementierung funktionsfähig ist, kann ein dem Regel-Metamodell entsprechendes Modell der *CARAT Cartridge* erstellt werden, auf das dann die manuell erstellte Implementierung angewendet wird. Fortan kann die Weiterentwicklung der *CARAT* Cartridge modellbasiert erfolgen.

Fig. 5 zeigt den Teil des Regel-Metamodells, der für die Beschreibung von Klassen in Modellen von Generierungsvorschriften verantwortlich ist. Er stellt somit eine Ergänzung zu den in Fig. 3 gezeigten Kernelementen des Regel-Metamodells dar. Das Regel-Metamodell ist auch in der in Fig. 1 gezeigten Übersicht unter der Bezeichnung *Cartridge Metamodel* dargestellt.

## Patentansprüche

1. System zur Schaffung eines auf einem Rechnersystem lauffähigen translativen Generators durch Erstellung eines Modells von Generierungsvorschriften und anschließender Transformation dieses Modells, wobei
a) der lauffähige translative Generator das Ergebnis der Transformation darstellt,
b) die zu erstellenden Modelle der Generierungsvorschriften Instanzen eines formal beschriebenen Regel-Metamodells sind,
c) der entstehende translative Generator dafür eingerichtet ist, Modelle von Softwaresystemen gemäß des Modells der Generierungsvorschriften in entsprechende Softwareartefakte zu transformieren,
d) die Modelle von Softwaresystemen ihrerseits Instanzen eines Anwendungs-Metamodells sind, zu dem eine Schnittstelle für programmatischen Zugriff auf seine Instanzen existiert.

2. System nach Anspruch 1, **dadurch gekennzeichnet, daß** die vom erzeugten translativen Generator generierten Softwareartefakte insbesondere Quellcode, Konfigurationsdateien, Modelle oder Teilmodelle von Softwaresystemen oder Verifikationberichte sind.

3. System nach einem der vorstehenden Ansprüche, **dadurch gekennzeichnet, daß** der entstehende translative Generator in einem Rahmenwerk ablauffähig ist, dessen Struktur und Schnittstellen beim Generieren des Generators bekannt sind.

4. System nach einem der vorstehenden Ansprüche, **dadurch gekennzeichnet**, da**ß** für das Regel-Metamodell zur Beschreibung von Generierungsvorschriften ein UML-Profil zur Abbildung auf das zu Notationszwecken verwendete UML (Unified Modeling Language) Metamodell existiert.

5. System nach einem der vorstehenden Ansprüche, **dadurch gekennzeichnet, daß** für das Anwendungs-Metamodell zur Beschreibung der Softwaresysteme ein UML-Profil zur Abbildung auf das zu Notationszwecken verwendete UML (Unified Modeling Language) Metamodell existiert.

6. System nach einem der vorstehenden Ansprüche, **dadurch gekennzeichnet, daß** die Zugriffsschnittstelle zu den Instanzen des Regel-Metamodells für die Beschreibung der Generierungsvorschriften in Java implementiert ist.

7. System nach einem der vorstehenden Ansprüche, **dadurch gekennzeichnet,** da**ß** die Zugriffsschnittstelle zu den Instanzen des Anwendungs-Metamodells für die Beschreibung der Softwaresysteme in Java implementiert ist.

8. System nach Anspruch 6, **dadurch gekennzeichnet, daß** der Systembestandteil, der für die Transformation des Modells der Generierungsvorschriften in den lauffähigen translativen Generator zuständig ist, in der Programmiersprache JPython implementiert ist.

9. System nach Anspruch 3 oder 7, **dadurch gekennzeichnet, daß** das Rahmenwerk, in dem der generierte translative Generator abläuft, sowie der generierte translative Generator selbst in der Programmiersprache JPython implementiert sind.

10. System nach einem der vorgenannten Ansprüche, **dadurch gekennzeichnet, daß** die Modelle der Generierungsvorschriften und das Laufzeitrahmenwerk dafür eingerichtet sind, als wesentliche Strukturierungsmerkmale eine komposite Struktur und Selektoren zu verwenden, wobei im Zuge der Generierung des translativen Generators die entsprechende Abbildung zwischen Modell und Laufzeitrahmenwerk stattfindet.

## Claims

1. System for the creation of an translative generator that is executable on a computer system. The system is created by means of the creation of a model of generation rules and the subsequent transformation of this model. The following specifications apply:
a) The executable translative generator is the result of the transformation.
b) The models of the generation rules to be created are instances of a formally described rule metamodel.
c) The resulting translative generator is designed to transform models of software systems into corresponding software artifacts according to the model of the generation rules.
d) The model of software systems themselves are instances of an application metamodel for which there is an interface for programmatic access to its instances.

2. System according to claim 1, **characterized by** the fact that the software artifacts generated by the translative generator comprise, in particular, source code, configuration files, models or partial models of software systems or verification reports.

3. System according to one of the above claims, **characterized by** the fact that the resulting translative generator is executable within a framework whose structure and interfaces are known when the generator is generated.

4. System according to one of the above claims, **characterized by** the fact that there is a UML profile for the description of generation rules for the rule metamodel to enable mapping to the UML (Unified Modeling Language) metamodel used for notation purposes.

5. System according to on of the above claims, **characterized by** the fact that that there is a UML profile for the description of the software systems for the application metamodel to enable mapping to the UML (Unified Modeling Language) metamodel used for notation purposes.

6. System according to one of the above claims, **characterized by** the fact that the access interface to the instances of the rule metamodel for the description of the generation rules is implemented in Java.

7. System according to one of the above claims, **characterized by** the fact that the access interface to the instances of the application metamodel for the description of the software systems is implemented in Java.

8. System according to claim 6, **characterized by** the fact that the system component that is responsible for the transformation of the model of the generation rules into the executable translative generator is implemented in the programming language JPython.

9. System according to claim 3 or claim 7, **characterized by** the fact that the framework in which the generated translative generator runs as well as the generated translative generator itself are implemented in the programming language JPython.

10. System according to one of the above claims, **characterized by** the fact that the models of the generation rules and the runtime framework are designed in such a way as to use a composite structure and selectors as an essential structuring feature. During the generation of the translative generator, the mapping from the model to the runtime framework is performed.

## Revendications

1. Système qui permet de créer un générateur translatif (qui s'exécute sur un ordinateur) en développant un modèle qui représente les règles de génération et enfin en transformant ce modèle, auquel cas :
a. le générateur translatif représente le résultat de la transformation,
b. les modèles à produire, suivant les règles de génération, sont des instances d'un métamodèle de règles décrit formellement,
c. le générateur translatif qui en résulte est conçu pour transformer des modèles de systèmes de logiciels en artefacts de logiciels suivant le modèle des règles de génération,
d. les modèles des systémes de logiciels sont des instances d'un métamodèle d'application pour lequel il existe une interface d'accès programmatique à ses instances.

2. Système conforme à la revendication 1, **caractérisé par le fait que** les artefacts de logiciels, produits par le générateur translatif, sont en particulier code source, des-fichiers de configuration, des modèles ou parties de modèles de systèmes de logiciels ou des rapports de vérifications.

3. Système conforme à l'une des revendications précédentes **caractérisé par le fait que** le générateur translatif qui en résulte s'exécute au sein d'un cadre dont la structure et les interfaces sont connus lors de la génération du générateur.

4. Système conforme à l'une des revendications précédentes **caractérisé par le fait qu'**il existe un profil UML pour le métamodèle de régles, permettant la description de règles de génération dans le cadre du métamodèle UML (Unified Modeling Language) utilisé pour des raisons de notation.

5. Système conforme à l'une des revendications précédentes **caractérisé par le fait qu'**il existe un profil UML pour le métamodèle d'application permettant la description des systèmes de logiciels dans le cadre du métamodèle UML (Unified Modeling Language), utilisé pour des raisons de notation.

6. Système conforme à l'une des revendications précédentes **caractérisé par le fait que** les interfaces d'accès aux instances du métamodèle de règles pour la description des règles de génération sont implémentées en Java.

7. Système conforme à l'une des revendications précédentes **caractérisé par le fait que** les interfaces d'accès aux instances du métamodèle d'application pour la description des systèmes de logiciels sont implémentées en Java.

8. Système conforme à l'une des revendications précédentes **caractérisé par le fait que** la partie du système responsable de la transformation du modèle des règles de génération en un générateur translatif exécutable est implémentée en JPython.

9. Système conforme à la revendication 3 ou 7 **caractérisé par le fait que** le cadre au sein duquel le générateur translatif s'exécute et le générateur translatif lui-même sont implémentés en JPython.

10. Système conforme à l'une des revendications précédentes **caractérisé par le fait que** les modèles des règles de génération ainsi que le cadre d'exécution sont conçus pour utiliser une structure composite et des sélecteurs comme caractéristiques principales de structuration, auquel cas une transformation du modèle en cadre d'exécution a lieu lors de la génération du générateur translatif.
